# FASCICULE DE BREVET EUROPEEN

(11) **EP 0 740 748 B1**
(45) Date de publication et mention de la délivrance du brevet: **02.06.1999**
(21) Numéro de dépôt: 95940330.4
(22) Date de dépôt: 17.11.1995
(51) Int. Cl.: F16G 3/00

(54) **DISPOSITIF DE JONCTIONNEMENT DECONNECTABLE ET RECONNECTABLE**
TRENNBARE UND WIEDERANSCHLIESSBARE VERBINDUNGSVORRICHTUNG
DISCONNECTABLE AND RECONNECTABLE COUPLING DEVICE

(30) Priorité: 21.11.1994 FR 9413918
(43) Date de publication de la demande: 06.11.1996
(73) Titulaire: Aser, F-42405 Saint-Chamond (FR)
(72) Inventeur: JAKOB, Horst, F-30360 Deaux (FR)
(74) Mandataire: Simonnot, Bernard
(86) Numéro de dépôt international: FR9501519
(87) Numéro de publication internationale: WO9616279

(56) Documents cités:
- FR-A- 1 140 516
- FR-A- 2 706 964
- GB-A- 548 209
- GB-A- 708 461
- US-A- 3 744 095

## Description

La présente invention concerne un dispositif de jonctionnement déconnectable et reconnectable pour bande transporteuse constitué de deux éléments souples plats présentant à l'avant des formes complémentaires susceptibles de s'imbriquer dans un même plan, reliés par l'arrière aux extrémités d'une bande transporteuse par collage, vulcanisation, rivetage, agrafage, soudure thermoplastique, ou formés directement sur les extrémités de la bande transporteuse par moulage, caractérisé en ce que chacun des éléments souples comporte à l'avant des languettes oblongues dans le sens longitudinal, séparées par des échancrures de forme complémentaire de celles des languettes, lesdites languettes comportant des trous alignés susceptibles de recevoir au moins deux, et de préférence plusieurs tiges de liaison les traversant dans le sens approximativement transversal, et étant constituées d'une matière élastomère armée d'une nappe, ou de plusieurs nappes d'armature, auxquelles adhère la matière élastomère, le nombre des tiges de jonctionnement et leur espacement dans le sens longitudinal étant choisis en fonction d'une part des forces à transmettre par la bande transporteuse, et d'autre part de l'adhérence des surfaces de matière élastomère aux surfaces de la nappe d'armature, ou des nappes d'armature.

Par convention sens longitudinal signifie ici le sens longitudinal de la bande transporteuse sur laquelle doivent être montés ou rapportés les éléments de dispositif de jonctionnement selon l'invention, que ceux-ci soient déjà en place sur la bande transporteuse, ou non. Sens transversal signifie le sens perpendiculaire au sens longitudinal tel qu'il vient d'être défini.

Egalement par convention,avant signifiera le côté d'un élément de dispositif de jonctionnement situé à l'opposé de l'extrémité de la bande transporteuse et arrière, le côté d'un élément de dispositif de jonctionnement situé vers la bande transporteuse.

La diversité croissante des domaines d'utilisation implique la nécessité de concevoir des bandes transporteuses spécifiques des différents domaines d'utilisation. A cet égard, on a déjà proposé des dispositifs de jonctionnement déconnectables et reconnectables pour bandes transporteuses constitués de deux éléments plats de formes complémentaires, les éléments de formes complémentaires présentant chacun des languettes oblongues orientées généralement vers l'avant de l'élément et dans le sens longitudinal, rattachées à une partie arrière de l'élément et séparées les unes des autres par des échancrures de forme complémentaire de celle des languettes correspondantes de l'autre élément, les languettes de chacun des éléments comportant au moins deux trous pour tiges de liaison qui sont généralement orientés dans le sens transversal et qui sont situés approximativement au milieu de l'épaisseur des languettes, en présentant un écart entre eux dans le sens longitudinal, de façon telle que les languettes des deux éléments étant en position d'imbrication, les trous transversaux pour tiges de liaison sont en alignement, le dispositif de liaison comportant une armature souple se présentant sous forme d'une nappe, ou de plusieurs nappes auxquelles adhère la matière constituant le dispositif de jonctionnement.

Le document FR-A-2 706 964 décrit de tels dispositifs de jonctionnement. D'autres publications antérieures (US-A-3 744 095 ; GB-A-708 461 ; GB-A-548 209 ; FR-A-1 140 516) décrivent des dispositifs du même genre général. Cependant, les particularités précitées ne se retrouvent pas toutes dans ces publications.

La présente invention a pour but de proposer des dispositifs de jonctionnement dont la tructure est telle qu'elle permet aisément d'adapter les propriétés de souplesse et de résistance aux forces de traction qui s'exercent dans le sens longitudinal sur les bandes transporteuses dans les différents domaines d'utilisation. De plus, les dispositifs de jonctionnement selon l'invention doivent permettre de surmonter sans dommage et sans usure notable les forces de traction exercées sur leur partie supérieure et les forces de compression exercées sur leur partie inférieure lors du passage de ceux-ci sur les rouleaux (moteur et de renvoi). Ces forces sont causées par la différence de trajet parcouru par la partie supérieure et par la partie inférieure cpmme on l'expliquera plus loin en liaison avec des figures représentant des formes de réalisation de l'invention.

La présente invention a également pour but de proposer des procédés pour la fabrication et pour la mise en oeuvre des dispositifs de jonctionnement selon l'invention.

Les languettes des éléments de dispositif de jonctionnement peuvent avoir diverses formes pourvu que les échancrures séparant les languettes aient une forme complémentaire de celles des languettes afin de pouvoir recevoir les languettes de l'autre- élément de dispositif de jonctionnement. La forme la plus simple est celle d'un rectangle. Dans ce cas les languettes situées sur les bords peuvent avoir exactement la même forme que celles situées plus vers le milieu des éléments de dispositif de jonctionnement. Cependant, en pratique on préfère des formes trapézoïdales, dont le côté avant est plus petit que celui qui est adjacent à la partie arrière de l'élément de dispositif de jonctionnement. Ces formes trapézoïdales permettent plus facilement l'imbrication des languettes appartenant alternativement à chacun des éléments de dispositif de jonctionnement, l'introduction de ces languettes dans les échancrures de forme complémentaire étant plus facile. C'est cette forme qui est représentée plus loin sur les dessins illustrant les formes de réalisation décrites. Mais d'autres formes sont également possibles, la seule condition à respecter étant que les échancrures aient une forme complémentaire de celle des languettes qui leur sont associées. Les procédés de fabrication indiqués plus loin permettent aisément la réalisation de ces formes, qu'il s'agiss de procédés de découpe ou de procédés de moulage.

La transmission des forces des languettes d'un élément de dispositif de jonctionnement aux languettes de l'autre élément de dispositif de jonctionnement s'effectue par l'intermédiaire de tiges de liaison. De telles tiges de liaison sont connues dans des dispositifs de jonctionnement antérieurs. Cependant, le fait de disposer des tiges de liaison au nombre d'au moins deux, espacées dans le sens longitudinal des languettes des éléments de dispositif de jonctionnement, les meilleurs résultats étant d'ailleurs obtenus en utilisant plusieurs tiges de liaison espacées dans le sens longitudinal des dispositifs de jonctionnement, permet de faire jouer l'adhérence de la matière élastomère sur la ou les nappes d'armature. Les surfaces d'adhérence de la matière élastomère sur la ou les nappes d'armature, entre deux tiges de liaison successives qui servent à transmettre des forces tendant à "peler" la ou les nappes d'armature par décrochement de la matière constitutive, peuvent être calculées, et réalisées en pratique sans difficulté, la longueur des languettes permettant de positionner les tiges de liaison sans contraintes dimensionnelles importantes, en fonction des forces à transmettre dans chaque cas d'utilisation pour lequel un dispositif de jonctionnement est conçu. Enfin, comme on le verra illustré plus loin dans des formes de réalisation décrites en détail, deux façons de résoudre le problème du passage des rouleaux peuvent être envisagées. La première consiste à utiliser deux nappes d'armature, tissées ou tricotées, ou constituées de câbles disposées de part et d'autre des trous destinés aux tiges de liaison. Compte-tenu de la différence de parcours entre la partie extérieure des dispositifs de jonctionnement et la pari tie intérieure des dispositifs de jonctionnement au passage des rouleaux (extérieur signifiant situé à l'opposé des rouleaux et intérieur signifiant situé du côté des rouleaux), les nappes d'armature présentent une certaine extensibilité, dans le sens longitudinal du dispositif de jonctionnement, avec une limite au-delà de laquelle l'armature ne s'étend plus et présente une résistance à la traction importante, et revient ensuite à sa dimension longitudinale normale, par son élasticité propre, mais aussi en y étant ramenée par l'élasticité de la matière élastomère qui adhère sur elle.

Cette propriété de l'armature peut être obtenue dans le cas du tissage en tissant volontairement la trame, ou la chaîne, de façon lâche, procédé qui est appelé embubage, et dans le cas du tricotage, en tricotant des mailles volontairement peu serrées et éventuellement en incorporant dans le tricot des fils de chaîne peu tendus qui forment une limite à l'extensibilité du tricot en se tendant sous l'effet d'une traction exercée sur l'élément de dispositif de jonctionnement, et par là, sur son armature tricotée. Dans le cas de câbles ceux-ci peuvent être disposés selon une forme sinusoïdale ou selon une forme de zig-zag.

La seconde façon consiste à n'utiliser qu'une seule nappe d'armature, tissée ou tricotée, ou constituée par des câbles formant des zig-zags ou des anses sinusoïdales, passant alternativement en-dessous d'un trou pour tige de liaison et au-dessus du trou pour tige de liaison suivant et ainsi de suite, l'extrémité des parties de nappes'situées dans les languettes étant repliée autour du trou pour tige de liaison le plus proche de l'extrémité de chaque languette et étant ramenée vers l'arrière sur une certaine distance. Une telle disposition évite les problèmes liés à la différence de parcours, au passage des rouleaux, d'une nappe extérieure et d'une nappe intérieure. Cependant la résistance à la traction procurée par l'adhérence des surfaces de matière élastomère n'est pas aussi élevée que dans le cas où il y a deux nappes. Le choix sera généralement fait en fonction des domaines d'utilisation et des propriétés de la bande transporteuse auquel le dispositif de jonctionnement est destiné. En ce qui concerne la liaison des éléments de dispositif de jonctionnement aux extrémités de la bande transporteuse de nombreuses solutions sont possibles. Ces solutions sont connues et ne sont pas revendiquées dans la présente invention. Il s'agit du rivetage, du vissage, du collage, de la vulcanisation, de la soudure thermoplastique des parties arrières des éléments de dispositif de jonctionnement sur la bande transporteuse. Un procédé préféré est celui de la vulcanisation selon le procédé connu dit en dents de scie. Mais on peut également utiliser le procédé de vulcanisation par étagement, ou le procédé de vulcanisation par insertion de l'arrière des éléments de dispositif de jonctionnement dans une fente ménagée approximativement dans le plan médian de l'extrémité de la bande transporteuse.

Différentes formes de réalisation de dispositifs de jonctionnement selon l'invention vont maintenant être décrites, en rapport avec les figures du dessin dans lequel :
la figure 1 est une vue en plan d'un dispositif de jonctionnement ;
la figure 2 est une coupe du dispositif de jonctionnement représenté sur la figure 1, selon la ligne de coupe II-II ;
la figure 3 est une première variante du dispositif de jonctionnement selon la figure 1, représentée par une coupe de l'une des languettes de celle-ci ;
la figure 4 représente, en coupe, une bande transporteuse munie d'un dispositif de jonctionnement selon l'invention au cours de son passage sur un rouleau ;
la figure 5 représente schématiquement de quelle façon s'appliquent les forces de traction et de compression sur un dispositif de jonctionnement selon l'invention ;
la figure 6 représente une deuxième variante de dispositif de jonctionnement selon l'invention, en perspective, une partie de la matière élastomère étant enlevée pour laisser apparaître la disposition de l'armature ;
la figure 7 représente une bande transporteuse comportant un dispositif de jonctionnement selon la revendication 6, connecté, passant sur un rouleau ;
la figure 8 représente une troisième variante de dispositif de jonctionnement selon l'invention, sous forme d'une fraction d'élément, en perspective, une partie de la matière élastomère ayant été enlevée pour faire apparaître l'armature ;
la figure 9 représente, en perspective, une quatrième variante du dispositif de jonctionnement selon l'invention, sous forme d'une fraction d'élément, une partie de la matière élastomère ayant été enlevée pour faire apparaître l'armature.

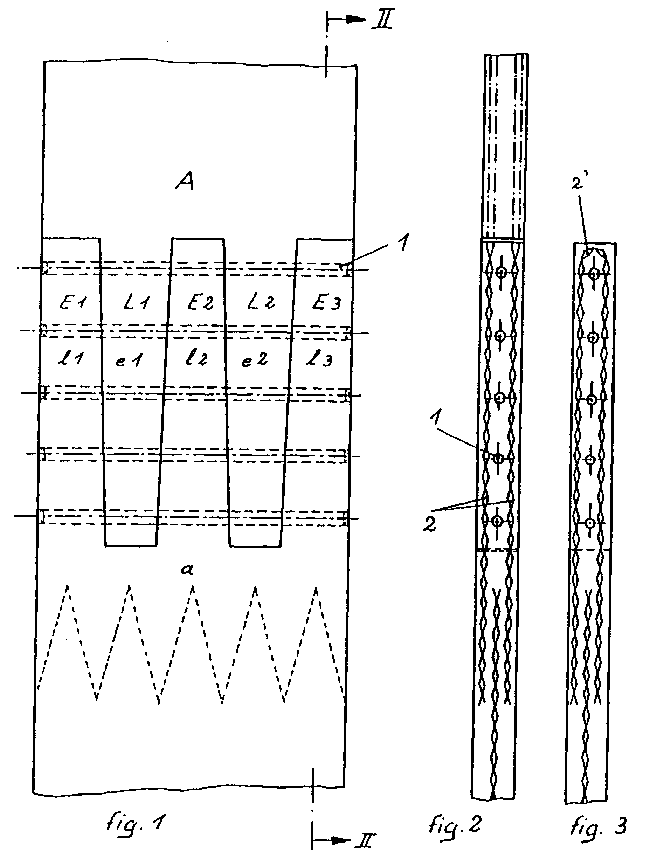

Les figures 1 et 2 représentent une première forme de réalisation de dispositif de jonctionnement selon l'invention. On reconnaît les languettes l₁, l₂ et l₃ d'un élément a de dispositif de jonctionnement et les languettes L₁ et L₂ de l'autre élément A de dispositif de jonctionnement, ainsi que les échancrures E₁, E₂ et E₃ occupées complètement par les languettes l₁, l₂ et l₃ et les échancrures e₁ et e₂ occupées complètement par les languettes L₁ et L₂. Les trous 1 pour tiges de liaison sont figurés par des lignes de tirets et par un trait mixte axial.

Dans l'exemple représenté, il y a 5 languettes (trois plus deux) cependant en réalité il y en a généralement plus. De même, le dispositif de jonctionnement représenté comporte cinq trous pour tige de liaison ; il peut y en avoir un autre nombre. L'espacement entre les trous pour tiges de liaison peut également être différent. La coupe de la figure 2 fait apparaître deux nappes tissées 2 disposées de part et d'autre des trous 1 pour tiges de liaison. La matière élastomère, ou la matière plastique qui entoure les nappes d'armature et adhère sur celle-ci est vulcanisée ou injectée. La liaison des éléments de dispositif de jonctionnement avec la bande transporteuse est représentée schématiquement. Il s'agit d'une liaison par vulcanisation "en dents de scie", bien connue des spécialistes. Cependant, comme dit plus haut, d'autres modes de fixation peuvent être prévus.

La figure 3 représente une deuxième forme de réalisation de l'invention, dans laquelle une nappe d'armature est repliée en bout de languette et revient dans l'autre sens après avoir contourné le trou pour tige de liaison situé le plus à l'extrémité de la languette en formant ainsi deux couches d'armature, de part et d'autre des tiges de liaison.

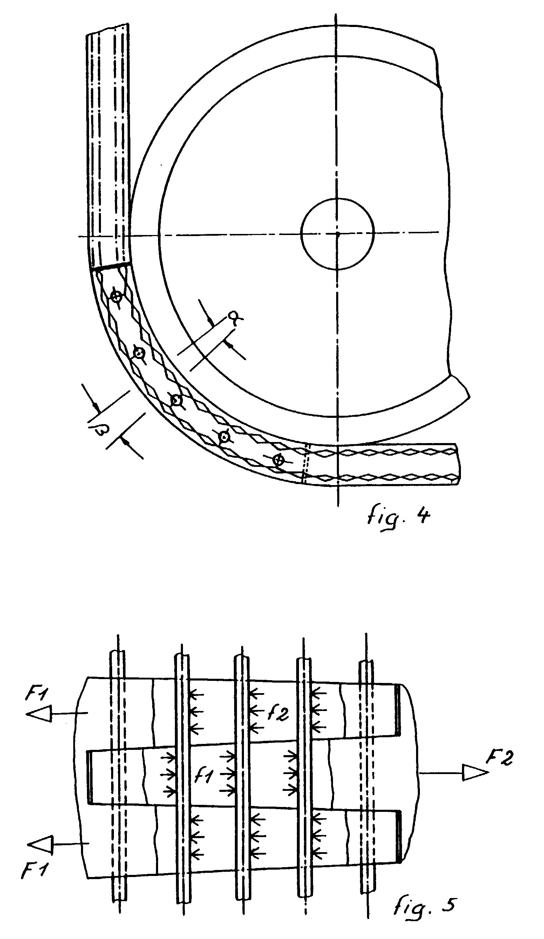

Les figures 4 et 5 montrent un dispositif de jonctionnement selon l'invention en situation de fonctionnement. La figure 4 montre que le parcours effectué par la nappe d'armature inférieure (arc α) est moins long que le parcours effectué par la nappe d'armature supérieure (arc β), du fait de la différence des rayons. La figure 5 montre comment travaille un dispositif de jonctionnement monté sur une bande transporteuse. Les tiges de liaison reliant les languettes appartenant aux deux éléments de dispositif de jonctionnement, en s'opposant aux forces de traction qui s'exercent sur les éléments de dispositif de jonctionnement (représentées par des grosses flèches F₁ et F₂ et des petites flèches f₁ et f₂) dans des sens opposés, provoquent la compression des parties de la couche intermédiaire située entre deux nappes d'armature et comportant les trous transversaux destinés aux tiges de liaison. Cette compression est absorbée, d'une part grâce à l'élasticité de la matière, et d'autre part en raison de l'adhérence de la matière élastomère aux nappes d'armature, par les nappes d'armature présentant elles-mêmes une certaine élasticité, ou au minimum une extensibilité limitée, comme indiqué plus haut. La surface d'adhésion de la matière aux nappes entre deux tiges est calculée de manière à ce que les forces qui s'exercent au passage des rouleaux ou lors d'à-coups de fonctionnement soient transmises aux nappes d'armature sans risque de "pelage", c'est-à-dire de décollement, de la matière élastomère par rapport aux nappes. Dans le cas où il y a une seule nappe d'armature passant alternativement au-dessus et au-dessous des trous pour tiges de liaison, le même phénomène se produit, les tiges de liaison provoquant une compression de la matière élastomère voisine. Dans ce cas également, les surfaces d'adhésion de la matière concernée, entre deux tiges de liaison sont calculées de manière à transmettre les forces sans risque de décollement. Avec une seule nappe les forces qui peuvent être absorbées sans risque sont plus faibles que dans le cas de deux nappes. C'est pourquoi le choix entre les deux formes de réalisation (à deux nappes ou à nappe unique) se fait en fonction des exigences du domaine d'utilisation, et des caractéristiques des bandes transporteuses sur lesquelles sont montés les dispositifs de jonctionnement ou sur lesquels ils sont moulés ou vulcanisés.

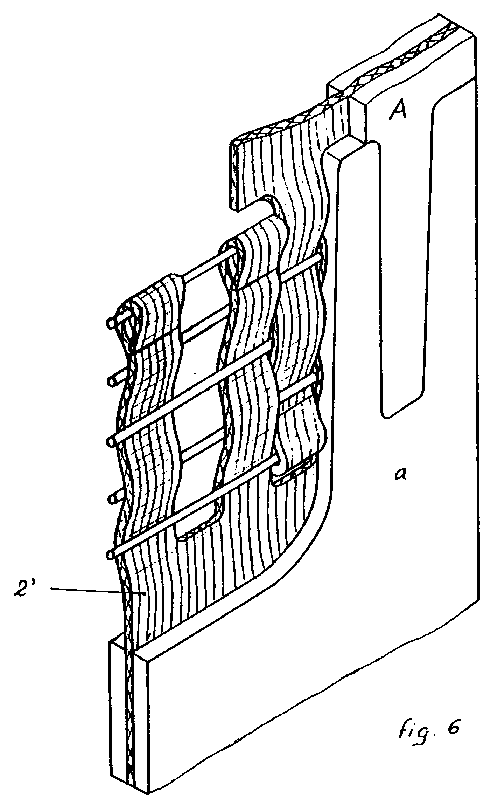

La figure 6 représente une variante de dispositif de jonctionnement selon l'invention. Dans ce Bas, c'est une nappe d'armature unique 2' de la bande transporteuse, située approximativement dans le plan médian de celle-ci, mise à nu par l'enlèvement de la matière élastomère de la bande transporteuse de part et d'autre, qui est utilisée pour constituer une nappe d'armature unique passant alternativement au-dessus et au-dessous de trous pour tige de liaison successifs réalisés dans chacune des languettes d'un élément de dispositif de jonctionnement, et en étant repliée autour du trou pour tige de liaison située le plus prés de l'extrémité libre des languettes, en revenant dans l'autre sens sur une certaine distance.

Une telle configuration permet d'éviter les problèmes inhérents à la différence de parcours d'une nappe supérieure et d'une nappe inférieure d'armature. La nappe unique d'armature 2', située approximativement au milieu de l'épaisseur du dispositif de jonctionnement, et de celle de la bande transporteuse, n'a pas besoin d'être élastique dans le sens longitudinal. C'est pourquoi il est prévu généralement que l'on utilise pour constituer cette nappe unique l'armature centrale d'une bande transporteuse réalisée de cette façon, le dispositif de jonctionnement étant moulé sur cette nappe unique disposée comme indiqué. Mais, il est cependant possible de réaliser également des dispositifs de jonctionnement présentant une armature de ce type sans utiliser l'armature centrale dégarnie de la matière élastomère d'une bande transporteuse, l'armature centrale étant disposée dans chaque élément de dispositif de jonctionnement lors de la fabrication de ceux-ci, et les éléments de dispositif de jonctionnement étant reliés ensuite aux extrémités d'une bande transporteuse comme proposé plus haut selon divers procédés possibles.

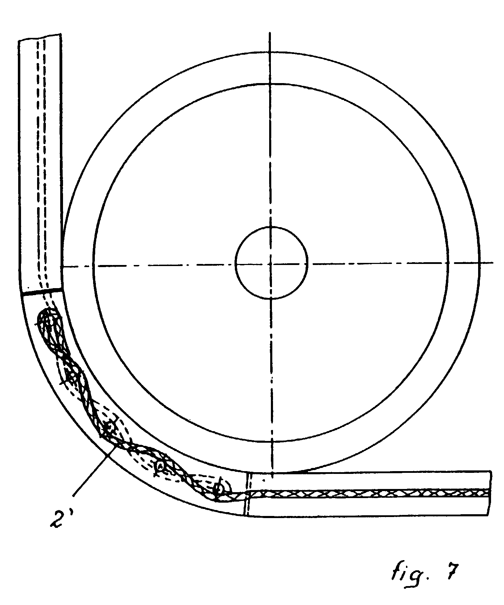

La figure 7 montre le passage d'un dispositif de jonctionnement selon la forme de réalisation représentée sur la figure 6 sur un rouleau. On comprend que les différences de rayon sont minimes et se compensent du fait du passage de la nappe d'armature alternativement au-dessus et au-dessous des trous pour tiges de liaison et que la nappe d'armature n'a dans ce cas pas besoin d'être élastique. Par contre, les à-coups dans les forces de traction exercées par la bande transporteuse sont absorbés par l'élasticité de la matière élastomère proche des tiges de liaison, l'élasticité de celle-ci étant limitée du fait de son adhésion à la nappe d'armature. Autrement dit, les principales causes de problèmes , à savoir le passage sur les rouleaux et les à-coups, sont également résolus dans cette forme de réalisation.

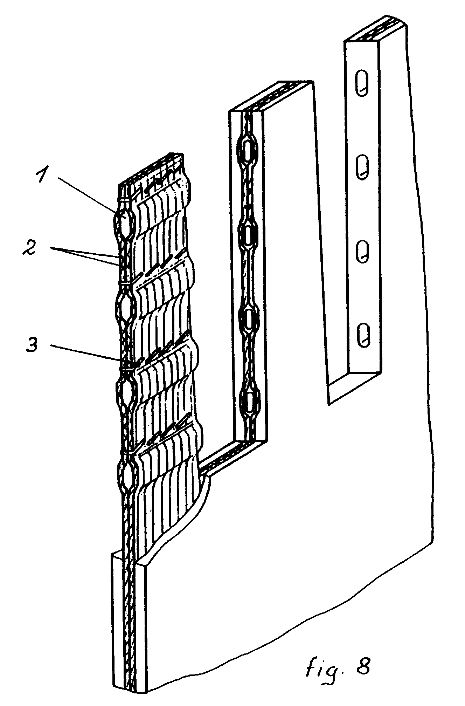

La figure 8 représente une autre forme de réalisation dans laquelle deux nappes d'armature sont disposées l'une contre l'autre, en étant séparées éventuellement par une fine couche de matière élastomère et s'écartent à l'emplacement des trous pour tiges de liaison. Une fine couche de matière existe entre les trous et les nappes qui les entourent presque complètement. Pour éviter une transmission trop brutale des forces au niveau des tiges de liaison et pour répartir ces forces sur les deux nappes, les deux nappes sont reliées à l'avant-de chaque trou pour tige de liaison par une couture 3 transversale, qui les empêche de s'écarter. Les coutures transversales peuvent être avantageusement remplacées par des liaisons soudées ou collées. Dans ce cas, également la surface d'adhérence aux nappes de la matière élastomère entre deux tiges de liaison est calculée comme indiqué précédemment pour les autres formes de réalisation. Il est souhaitable que les tissus constituant les nappes comportent de l'embubage dans le sens longitudinal des éléments de dispositif de jonctionnement. Si les nappes sont en tricot, celui-ci présente utilement une extensibilité limitée.

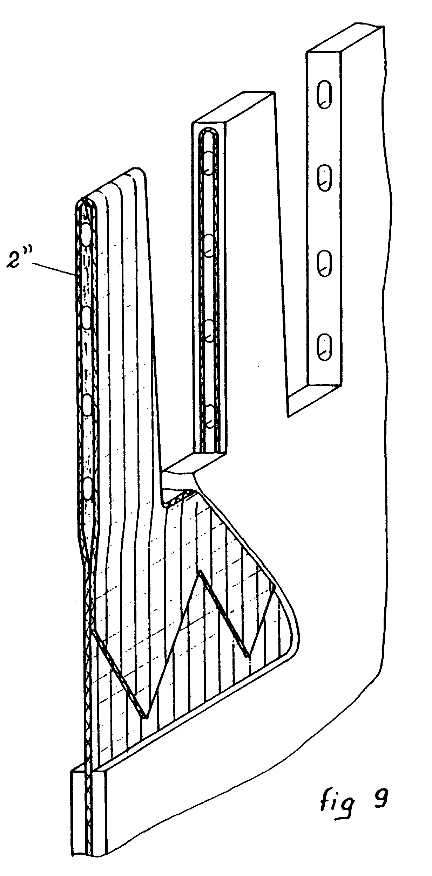

La figure 9 représente encore une autre forme de réalisation de l'invention. L'armature, comme dans le cas de la forme de réalisation selon la figure 6 est celle de la bande transporteuse, mise à nu par l'enlèvement de la matière élastomère de la bande transporteuse. Mais dans cette forme de réalisation l'armature 2" s'étend d'abord d'un même côté des trous pour tiges de liaison, contourne le trou pour la tige de liaison situé le plus en avant, puis s'étend au-dessus des trous pour tiges de liaison et de sa première couche, en formant ainsi une deuxième couche d'armature de l'autre côté des trous pour tige de liaison. L'extrémité de la deuxième couche, ramenée contre la première couche est avantageusement découpée en formant des indentations en dents de scie, ou de forme sinusoïdale.

Dans cette forme de réalisation, à la différence de la forme de réalisation de la figure 6, il est souhaitable que l'armature présente des propriétés d'élasticité et/ou d'extensibilité car on remarquera que lors du passage sur des rouleaux, le parcours de la couche supérieure d'armature est plus long que celui de la couche inférieure, par suite de la différence de rayon.

Pour la réalisation des éléments de jonctionnement selon l'invention, il est possible de mouler, ou de vulcaniser, dans une première étape, un dispositif de jonctionnement dont les éléments forment à ce stade une seule pièce, dans un moule comportant des broches mobiles mises en place pour ménager les trous transversaux dans les futures languettes, puis, dans une seconde étape, les broches mobiles ayant été retirées après le moulage, ou la vulcanisation, les échancrures et les languettes sont réalisées par découpe de leurs contours au moyen d'un outillage approprié, en séparant ainsi les deux éléments de dispositif de jonctionnement.

Lors du moulage, ou de la vulcanisation du dispositif de jonctionnement, à la première étape, il est possible de profiter du moulage, ou de la vulcanisation, pour effectuer, dans la même opération la jonction par moulage, ou par vulcanisation, avec les extrémités de la bande transporteuse.

Cependant, il est également possible de mouler, ou de vulcaniser séparément l'un de l'autre les éléments complémentaires de dispositif de jonctionnement. Dans ce cas, il est également possible d'effectuer, au cours de la même opération de moulage ou de vulcanisation, la jonction de chaque élément de dispositif de jonctionnement avec une extrémité respective de la bande transporteuse.

Bien entendu, ce dernier procédé de moulage séparément de l'autre des éléments complémentaires de dispositif de jonctionnement est le seul possible dans le cas où c'est l'armature de la bande transporteuse qui est utilisée pour constituer l'armature des éléments de dispositif de jonctionnement.

En ce qui concerne la fabrication des éléments de dispositif de jonctionnement selon la quatrième variante (figure 9 ) il est possible de procéder comme suit :
a) enlèvement de la matière élastomère de part et d'autre de l'armature approximativement centrale, à l'extrémité d'une bande transporteuse,
b) découpe dans cette armature 2" d'échancrures longitudinales d'une forme correspondant approximativement, sur une moitié de la longueur, à celle des futures échancrures, la forme de ces échancrures étant, sur l'autre moitié de leur longueur, symétrique de celle de la première moitié, par rapport à une ligne de symétrie partageant les deux moitiés,
c) disposition de la nappe d'armature ainsi préparée en-dessous des broches mobiles du moule de vulcanisation ou d'injection, destinées à ménager les trous pour tiges de jonctionnement, repli de la nappe d'armature au-delà et autour de la broche mobile située le plus en avant, disposition de la nappe d'armature au-dessus des broches mobiles du moule de vulcanisation ou d'injection, en formant ainsi uhe deuxième couche d'armature, application de l'extrémité de la nappe d'armature contre la première couche,
d) vulcanisation ou injection d'une matière analogue à celle de la bande transporteuse, ou au moins compatible avec celle-ci.

## Revendications

1. Dispositif de jonctionnement déconnectable et reconnectable pour bandes transporteuses constitué de deux éléments plats (a, A) de formes complémentaires, les éléments de formes complémentaires présentant chacun des languettes oblongues (l₁, l₂, l₃, L₁, L₂) orientées généralement vers l'avant de l'élément et dans le sens longitudinal, rattachées à une partie arrière de l'élément, et séparées les unes des autres par des échancrures (E₁, E₂, E₃, e₁, e₂,) de forme complémentaire de celle des languettes correspondantes de l'autre élément, les languettes de chacun des éléments comportant au moins deux trous (1) pour tiges de liaison qui sont généralement orientés dans le sens transversal et qui sont situés approximativement au milieu de l'épaisseur des languettes, en présentant un écart entre eux dans le sens longitudinal, de façon telle que les languettes des deux éléments étant en position d'imbrication, les trous transversaux pour tiges de liaison soient en alignement, le dispositif de jonctionnement comportant une armature (2) réalisée en au moins deux nappes auxquelles adhère la matière constituant le dispositif de jonctionnement, caractérisé par le fait que l'armature (2) comprend deux nappes (2) disposées à l'intérieur des éléments (a, A) de dispositif de jonctionnement dans deux plans généralement parallèles entre eux et parallèles aux faces du dispositif de jonctionnement, au-dessus et au-dessous des trous (1) pour tiges de fixation des languettes (l₁, l₂, l₃, L₁, L₂), en se prolongeant dans la partie arrière des éléments (a, A), ces nappes d'armature (2) étant souples et présentant dans le sens longitudinal du dispositif de jonctionnement une extensibilité contrôlée conférant au dispositif de jonctionnement des propriétés d'élasticité par la combinaison de ladite extensibilité contrôlée avec l'élasticité de la matière constitutive du dispositif de jonctionnement

2. Dispositif de jonctionnement selon la revendicaton 1, caractérisé par le fait que les deux nappes d'armature (2) de chaque élément de dispositif de jonctionnement sont disposées l'une contre l'autre en s'écartant à l'emplacement des trous (1) pour tiges de liaison de manière à ce que les trous pour tiges de liaison soient ménagés entre les deux nappes (2) d'armature écartées à cet endroit, une couture (3) de renfort transversale, ou une liaison soudée ou collée transversale, étant réalisée immédiatement à l'avant des trous pour tiges de liaison.

3. Dispositif de jonctionnement déconnectable et reconnectable pour bandes transporteuses constitué de deux éléments plats de formes complémentaires, les éléments de formes complémentaires présentant chacun des languettes oblongues orientées généralement vers l'avant de l'élément et dans le sens longitudinal, rattachées à une partie arrière de l'élément, et séparées les unes des autres par des échancrures de forme complémentaire de celle des languettes correspondantes de l'autre élément, les languettes de chacun des éléments comportant au moins deux trous pour tiges de liaison qui sont généralement orientés dans le sens transversal et qui sont situés approximativement au milieu de l'épaisseur des languettes, en présentant un écart entre eux dans le sens longitudinal, de façon telle que les languettes des deux éléments étant en position d'imbrication, les trous transversaux pour tiges de liaison soient en alignement, le dispositif de jonctionnement comportant une armature réalisée en une nappe à laquelle adhère la matière constituant le dispositif de jonctionnement, caractérisé par le fait que les éléments de dispositif de jonctionnement comportent une seule nappe d'armature (2') disposée généralement dans une zone entourant le plan médian, cette nappe unique d'armature (2') passant alternativement au-dessus et au-dessous des trous (1) de fixation, la nappe d'armature étant repliée autour de chacun des trous (1) pour tiges de liaison situés le plus près de chacune des extrémités libres des languettes (l₁, l₂, l₃, L₁, L₂).

4. Dispositif de jonctionnement déconnectable et reconnectable pour bandes transporteuses constitué de deux éléments plats de formes complémentaires, les éléments de formes complémentaires présentant chacun des languettes oblongues orientées généralement vers l'avant de l'élément et dans le sens longitudinal, rattachées à une partie arrière de l'élément, et séparées les unes des autres par des échancrures de forme complémentaire de celle des languettes correspondantes de l'autre élément, les languettes de chacun des éléments comportant au moins deux trous pour tiges de liaison qui sont généralement orientés dans le sens transversal et qui sont situés approximativement au milieu de l'épaisseur des languettes, en présentant un écart entre eux dans le sens longitudinal, de façon telle que les languettes des deux éléments étant en position d'imbrication, les trous transversaux pour tiges de liaison soient en alignement, le dispositif de jonctionnement comportant une armature réalisée en une nappe à laquelle adhère la matière constituant le dispositif de jonctionnement, caractérisé par le fait que l'armature de chaque élément de dispositif de jonctionnement est constituée par l'armature (2") de l'extrémité correspondante de la bande transporteuse, dégarnie de la matière élastomère de la bande transporteuse, ladite armature étant diposée dans chaque élément de dispositif de jonctionnement de manière à s'étendre au-dessus des trous pour tiges de liaison des différentes languettes en formant une première couche d'armature, et après un contournement de celui des trous (1) pour tiges de liaison situé le plus en avant, à s'étendre au-dessous des trous pour tiges de liaison, en formant une deuxième couche d'armature, l'extrémité de l'armature étant appliquée contre la première couche, à l'arrière de l'élément de dispositif de jonctionnement.

5. Dispositif de jonctionnement selon la revendication 1, 2 ou 3, caractérisé par le fait que les nappes d'armature (2 ou 2') sont constituées d'un tricot comportant outre les rangées de mailles, des fils de chaîne résistants disposés longitudinalement, insérés dans le tricot de façon lâche au cours du tricotage.

6. Procédé de réalisation de dispositif de jonctionnement selon l'une des revendications 1 ou 2, caractérisé par le fait que les deux éléments complémentaires de dispositif de jonctionnement sont
- d'abord vulcanisés ou moulés en formant une seule pièce, des broches mobiles étant mises en place dans le moule pour ménager les trous transversaux dans les languettes,
- puis les broches mobiles ayant été retirées après le moulage ou la vulcanisation, les languettes et les échancrures sont réalisées par découpe de leurs contours au moyen d'un outillage approprié, en séparant ainsi les deux éléments de dispositif de jonctionnement.

7. Procédé de réalisation de dispositif de jonctionnement selon l'une des revendications 1 à 5, caractérisé par le fait que les éléments de dispositif de jonctionnement de formes complémentaires sont moulés ou vulcanisés chacun séparément dans un moule respectif comportant des broches mobiles montées dans le sens transversal traversant successivement des espaces creux du moule correspondant aux languettes (l₁, l₂, l₃, L₁, L₂) et des espaces pleins du moule correspondant aux échancrures (E₁, E₂, E₃, e₁, e₂), ces broches mobiles étant retirées avant le démoulage.

8. Procédé de mise en oeuvre des éléments de dispositif de jonctionnement réalisés selon la revendication 6, ou selon la revendication 7, caractérisé par le fait que la liaison à la bande transporteuse des éléments de dispositif de jonctionnement est effectuée par moulage ou par vulcanisation, directement sur les extrémités d'une bande transporteuse lors du moulage ou de la vulcanisation des éléments.

9. Procédé de réalisation des éléments de dispositif de jonctionnement selon la revendication 3, caractérisé par le fait que les éléments de dispositif de jonctionnement sont moulés ou vulcanisés sur des extrémités d'une bande transporteuse préalablement dégarnie de la matière constitutive de la bande transporteuse, la nappe d'armature subsistante étant découpée en bandelettes dont la forme correspond à celle des bandelettes des éléments de dispositif de jonctionnement qui doivent être réalisés et disposées dans le moule successivement au-dessus et au-dessous de broches mobiles destinées à ménager les trous pour tiges de liaison, l'extrémité des bandelettes étant repliée autour de la broche située à l'extrémité libre des futures languettes, lesdites broches mobiles étant retirées avant le démoulage.

10. Procédé de réalisation des éléments de jonctionnement selon la revendication 4, caractérisé par le fait qu'il comporte les opérations suivantes :
a) enlèvement de la matière élastomère de part et d'autre de l'armature approximativement centrale, à l'extrémité d'une brande transporteuse,
b) découpe dans cette armature (2") d'échancrures longitudinales d'une forme correspondant approximativement, sur une moitié de la longueur, à celle des futures échancrures, la forme de ces échancrures étant, sur l'autre moitié de leur longueur, symétrique de celle de la première moitié par rapport à une ligne de symétrie partageant les deux moitiés,
c) disposition de la nappe d'armature ainsi préparée en-dessous des broches mobiles du moule de vulcanisation ou d'injection, destinées à ménager les trous pour tiges de jonctionnement, repli de la nappe d'armature au-delà et autour de la broche mobile située le plus en avant, dispo sition de la nappe d'armature au-dessus des broches mobiles du moule de vulcanisation ou d'injection, en formant ainsi une deuxième couche d'armature, application de l'extrémité de la nappe d'armature contre la première couche,
d) vulcanisation ou injection d'une matière analogue à celle de la bande transporteuse, ou au moins compatible avec celle-ci.

## Patentansprüche

1. Lösbare und wieder anbringbare Verbindungsvorrichtung für Förderbänder, bestehend aus zwei flachen, komplementär ausgebildeten Elementen (a, A), welche jeweils längliche, insgesamt zum vorderen Teil des Elements und in Längsrichtung ausgerichtete und mit einem hinteren Teil des Elements verbundene Laschen (l₁, l₂, l₃, L₁, L₂) aufweisen, die voneinander durch komplementär zur Form der entsprechenden Laschen des anderen Elements ausgebildete Ausschnitte (E₁, E₂, E₃, e₁, e₂) getrennt sind, wobei die Laschen eines jeden Elements mindestens zwei im wesentlichen transversal ausgerichtete und etwa mittig durch die Dicke der Laschen geführte für Verbindungsstangen vorgesehene Bohrungen (1) aufweisen, welche in Längsrichtung auf eine Weise beabstandet sind, daß sie, wenn die Laschen sich in Eingriffstellung befinden, fluchtend ausgerichtet sind, wobei die Verbindungsvorrichtung mit einer Bewehrung (2) versehen ist, die aus mindestens zwei Lagen besteht, an denen das die Verbindungsvorrichtung bildende Material haftet, **dadurch gekennzeichnet, daß** die Bewehrung (2) aus zwei Lagen (2) besteht, welche im Inneren der Verbindungsvorrichtungselemente (a, A) in zwei zu den Flächen der Verbindungsvorrichtung und zueinander selbst im wesentlichen parallel angeordneten und ober- und unterhalb der für die Stangen zur Befestigung der Laschen (l₁, l₂, l₃, L₁, L₂) vorgesehenen Bohrungen (1) liegenden Ebenen eingebettet sind und sich bis in den hinteren Teil der Elemente (a, A) erstrekken, wobei diese Bewehrungslagen (2) biegsam sind und in Längsrichtung der Verbindungsvorrichtung eine kontrollierte Streckbarkeit aufweisen, wodurch und in Verbindung mit der Elastizität des Verbindungsvorrichtungsmaterials der Verbindungsvorrichtung elastische Eigenschaften verliehen werden.

2. Verbindungsvorrichtung Anspruch 1, **dadurch gekennzeichnet, daß** die zwei Bewehrungslagen (2) eines jeden Verbindungsvorrichtungselements gegeneinander anliegend angeordnet und an der Stelle der Bohrungen (1) für Verbindungsstangen beabstandet sind, so daß die Verbindungsstangenbohrungen zwischen den beiden an dieser Stelle beabstandeten Bewehrungslagen geführt werden, wobei eine transversale Verstärkungsnaht oder eine transversale Schweiß- oder Klebeverbindung unmittelbar an der Vorderseite der Verbindungsstangenbohrungen angebracht wird.

3. Lösbare und wieder anbringbare Verbindungsvorrichtung für Förderbänder, bestehend aus zwei flachen, komplementär ausgebildeten Elementen, welche jeweils längliche, insgesamt zum vorderen Teil des Elements und in Längsrichtung ausgerichtete und mit einem hinteren Teil des Elements verbundene Laschen aufweisen, die voneinander durch komplementär zur Form der entsprechenden Laschen des anderen Elements ausgebildete Ausschnitte getrennt sind, wobei die Laschen eines jeden Elements mindestens zwei im wesentlichen transversal ausgerichtete und etwa mittig durch die Dicke der Laschen geführte für Verbindungsstangen vorgesehene Bohrungen aufweisen, welche in Längsrichtung auf eine Weise beabstandet sind, daß sie, wenn die Laschen sich in Eingriffstellung befinden, fluchtend ausgerichtet sind, wobei die Verbindungsvorrichtung mit einer einlagigen Bewehrung versehen ist, an der das die Verbindungsvorrichtung bildende Material haftet, **dadurch gekennzeichnet, daß** die Verbindungsvorrichtungselemente mit einer einzigen, im wesentlichen in einem Bereich um die Mittelebene eigebettete Bewehrungslage (2') versehen sind, wobei diese einzige Bewehrungslage (2') abwechselnd oberhalb und unterhalb der Befestigungslöcher (1) geführt wird und um jede der den freien Enden der Laschen (l₁, l₂, l₃, L₁, L₂) am nächsten gelegenen Verbindungsstangenbohrungen (1) umgeklappt wird.

4. Lösbare und wieder anbringbare Verbindungsvorrichtung für Förderbänder, bestehend aus zwei flachen, komplementär ausgebildeten Elementen, welche jeweils längliche, insgesamt zum vorderen Teil des Elements und in Längsrichtung ausgerichtete und mit einem hinteren Teil des Elements verbundene Laschen aufweisen, die voneinander durch komplementär zur Form der entsprechenden Laschen des anderen Elements ausgebildete Ausschnitte getrennt sind, wobei die Laschen eines jeden Elements mindestens zwei im wesentlichen transversal ausgerichtete und etwa mittig durch die Dicke der Laschen geführte für Verbindungsstangen vorgesehene Bohrungen aufweisen, welche in Längsrichtung auf eine Weise beabstandet sind, daß sie, wenn die Laschen sich in Eingriffstellung befinden, fluchtend ausgerichtet sind, wobei die Verbindungsvorrichtung mit einer einlagigen Bewehrung versehen ist, an der das die Verbindungsvorrichtung bildende Material haftet, **dadurch gekennzeichnet, daß** die Bewehrung eines jeden Verbindungsvorrichtungselements durch die Bewehrung (2") des entsprechenden, von dem Elastomerstoff des Förderbands befreiten Förderbandendes gebildet wird, wobei die besagte Bewehrung in jedem Verbindungsvorrichtungselement so angeordnet ist, daß sie sich oberhalb der Verbindungsstangenbohrungen erstreckt und eine erste Bewehrungslage bildet und, nachdem sie um die vorderste Verbindungsstangenbohrung geführt wurde, sich unterhalb der Verbindungsstangenbohrungen erstreckt und eine zweite Bewehrungslage bildet, wobei das Ende der Bewehrung im hinteren Bereich der Verbindungsvorrichtung gegen die erste Lage angedrückt wird.

5. Verbindungsvorrichtung nach Anspruch 1, 2 oder 3, **dadurch gekennzeichnet, daß** die Bewehrungslagen (2 bzw. 2') aus einem Strickgewebe bestehen, welches, außer den Maschenreihen, in Längsrichtung angeordnete widerstandsfähige Kettfäden aufweist, die in das Gewebe während des Wirkens locker eingebracht werden.

6. Verfahren zur Herstellung einer Verbindungsvorrichtung nach einem der Ansprüche 1 oder 2, **dadurch gekennzeichnet, daß** die beiden komplementären Elemente der Verbindung
- zunächst in einem einzigen Teil vulkanisiert oder formgegossen werden, wobei zur Aussparung der transversalen Bohrungen in den Laschen bewegliche Stifte in die Form eingesetzt wurden,
- wonach, und nachdem die beweglichen Stifte nach dem Formgießen bzw. der Vulkanisieren entfernt wurden, die Laschen und Ausschnitte durch Ausschneiden entlang ihrer Umrisse mittels geeigneten Werkzeugs ausgebildet werden und auf diese Weise die beiden Elemente der Verbindungsvorrichtung voneinander trennen.

7. Verfahren zur Herstellung einer Verbindungsvorrichtung nach einem der Ansprüche 1 bis 5, **dadurch gekennzeichnet, daß** die komplementär geformten Elemente der Verbindungsvorrichtung jeweils in einer getrennten Form formgegossen bzw. vulkanisiert werden, welche mit beweglichen, in Querrichtung eingesetzten und nacheinander die den Laschen (l1, l2, l3, L1, L2) entsprechenden Hohlräume und die den Ausschnitten (E1, E2, E3, e1, e2) entsprechenden ausgefüllten Bereiche der Form durchquerenden Stiften versehen sind, wobei diese beweglichen Stifte vor dem Ausformen entfernt werden.

8. Verfahren zur Einsetzung der nach Anspruch 6 oder nach Anspruch 7, hergestellten Verbindungsvorrichtungselemente, **dadurch gekennzeichnet, daß** die Verbindung der Verbindungsvorrichtungselemente mit dem Förderband durch Formgießen oder Vulkanisieren direkt an den Enden eines Förderbands während des Formgießens bzw. der Vulkanisierens der Elemente bewerkstelligt wird.

9. Verfahren zur Herstellung der Verbindungsvorrichtungselemente nach Anspruch 3, **dadurch gekennzeichnet, daß** die Elemente der Verbindungsvorrichtung auf die zuvor von dem Material, aus dem das Förderband besteht, befreiten Enden eines Förderbands formgegossen oder vulkanisiert werden, wobei die an den befreiten Enden übrigbleibende Bewehrungslage in Streifen geschnitten wird, deren Form den Streifen der herzustellenden Verbindungsvorrichtungselemente entspricht und die in der Form abwechselnd über und unter den zur Bildung der Bohrungen für die Verbindungsstangen vorgesehenen beweglichen Stiften angeordnet werden, wobei das Ende der Streifen um den an dem freien Ende der zukünftigen Laschen gelegenen Stift umgeklappt wird und die besagten beweglichen Stifte vor dem Ausformen entfernt werden.

10. Verfahren zur Herstellung der Verbindungsvorrichtungselemente nach Anspruch 4, **dadurch gekennzeichnet, daß** es die folgenden Verfahrensschritte aufweist:
a) an einem Förderbandende, Entfernen des Elastomerstoffs beiderseits der in etwa mittig gelegenen Bewehrung,
b) in dieser Bewehrung (2"), Ausschneiden von längsgerichteten Ausschnitten deren Form über etwa die Hälfte ihrer Länge ungefähr der Form der zukünftigen Ausschnitte entspricht und über die andere Hälfte der Länge symmetrisch zur ersten Hälfte in Bezug auf eine die beiden Hälften teilende Symmetrielinie ausgebildet ist,
c) Anordnung der auf diese Weise vorbereiteten Bewehrungslage unterhalb der beweglichen, für die Aussparung der Verbindungsstangenbohrungen vorgesehenen Stifte der Vulkanisierungs- bzw. Spritzgußform, umklappen der Bewehrungslage um den vordersten beweglichen Stift, Anordnung oberhalb der beweglichen Stifte der Vulkanisierungs- bzw. Spritzgußform, wodurch eine zweite Bewehrungslage gebildet wird, deren Ende gegen die erste Lage angedrückt wird,
d) Vulkanisieren bzw. Einspritzen eines Stoffs, der dem des Förderbands entspricht oder zumindest zu diesem kompatibel ist.

## Claims

1. Disconnectible and reconnectible junction device for conveyor bands made up of two flat elements (a, A) of complementary shapes, the complementary shaped elements presenting each one oblong strips (l₁, I₂, I₃, L₁, L₂) directed generally towards the front of the element and connected in the longitudinal direction to a rear part of the element, and separated the one from the other by notches (E₁, E₂, E₃, e₁, e₂) of a shape complementary to those of the corresponding strips of the other element, the strips of each one of the elements comprising at least two holes (1) for linking stems oriented generally in the transversal direction and which are located approximately in the middle of the thickness of the strips, spaced one from the other in the longitudinal direction, in such a way that the strips of the two elements being in an interleaved position, the transversal holes for linking stems are in alignment, the junction device comprising a reinforcement (2) made up of at least two layers to which adheres the constituent material of the junction device, characterised by the fact that the reinforcement (2) comprises two layers (2), arranged inside the junction device elements (a, A) in two generally planes parallel one to the other and parallel to the junction device faces, above and below the holes (1) for the strip fastening stems (l₁, l₂, l₃, L₁, L2), by extending in the rear part of the elements (a, A), these reinforcement layers (2) being flexible and presenting in the longitudinal direction of the junction device a controlled extensibility conferring to the junction device elasticity properties by the combination of the said controlled extensibility to the elasticity of the constituent material of the junction device.

2. Junction device according to claim 1, characterised by the fact that the two reinforcement layers (2) of each junction device element are arranged one against the other, being spaced apart at the location of the linking stems holes (1), in such a way that the linking stems holes are left open between the two reinforcement layers (2), spaced apart at this location, a transversal strengthening seam (3), or a transversal welded or sticked connection being formed at the immediate front of the linking stems holes.

3. Disconnectible and reconnectible junction device for conveyor bands made up of two flat elements of complementary shapes, the complementary shaped elements presenting each one oblong strips directed generally towards the front of the element and connected in the longitudinal direction to a rear part of the element, and separated the ones from the others by notches of a shape complementary to those of the corresponding strips of the other element, the strips of each one of the elements comprising at least two holes for linking stems generally oriented in the transversal direction and located approximately in the middle of the strip thickness, spaced one from the other in the longitudinal direction, in such a way that the strips of the two elements being in an interleaved position, the transversal holes for linking stems are in alignment, the junction device comprising a reinforcement made with a layer to which adheres the constituent material of the junction device, characterised by the fact that the elements of the junction device comprise one single reinforcement layer (2'), arranged generally in an area surrounding the median plane, this single reinforcement layer (2') passing alternately above and below the fastening holes (1), the reinforcement layer being bent back around each one of the linking stems holes (1) located the closest to each one of the free ends of the strips (l₁, l₂, l₃, L₁, L₂).

4. Disconnectible and reconnectible junction device for conveyor bands made up of flat elements of complementary shapes, the complementary shaped elements presenting each one oblong strips directed generally towards the front of the element and connected in the longitudinal direction to a rear part of the element, and separated the ones from the others by notches of shape complementary to those of the corresponding strips of the other element, the strips of each one of the elements comprising at least two holes for linking stems, oriented generally in the transversal direction and which are located approximately in the middle of the strip thickness, spaced one from the other in the longitudinal direction, in such a way that the strips of the two elements being in an interleaved position, the linking stems transversal holes are in alignment, the junction device comprising a reinforcement made with one layer to which adheres the constituent material of the junction device, characterised by the fact that the reinforcement of each element of the junction device is formed by the reinforcement (2") of the corresponding end of the conveyor band, uncovered of the elastomer material of the conveyor band, the said reinforcement being arranged in each junction device element in such a way as to extend above the linking stems holes of the various strips thus forming a first reinforcement layer, and after passing around one of the linking stems holes (1) located the most forwardly, then to extend below the linking stems holes, thus forming a second reinforcement layer, the reinforcement end being applied against the first layer at the rear of the junction device element.

5. Junction device according to claims 1, 2 or 3, characterised by the fact that the reinforcement layers (2 or 2') are made up with a knitting including besides the rows of stitches, strong warp threads arranged longitudinally, loosely inserted in the knitted fabric in course of knitting.

6. Method for making a junction device according to one of the claims 1 or 2, characterised by the fact that the two complementary elements of the junction device are
- first vulcanized or moulded thus forming one single piece, moving spindles being set into position in the mould for leaving open the transversal holes in the strips,
- then once the moving spindles removed after moulding or vulcanization, the strips and the notches are formed by cutting their contours by means of a suitable tool, thus separating the two elements of the junction device.

7. Method for making a junction device according to one of the claims 1 to 5, characterised by the fact that the junction device elements of complementary shapes are moulded or vulcanized each one separately in a respective mould comprising moving spindles mounted transversally and crossing successively through hollow spaces of the mould corresponding to the strips (l₁, l₂, l₃, L₁, L₂) and solid spaces of the mould corresponding to the notches (E₁, E₂, E₃, e₁, e₂), these moving spindles being removed before the stripping.

8. Method of implementation of the junction device elements made according to claim 6 or according to claim 7, characterised by the fact that the linking to the conveyor band of the junction device elements is carried out by moulding or vulcanization, directly over the ends of a conveyor band during the moulding or the vulcanization of the elements.

9. Method for making junction device elements according to claim 3, characterised by the fact that the junction device elements are moulded or vulcanized over the ends of the conveyor band previously uncovered of the conveyor band constituent material, the remaining reinforcement layer being cut into narrow strips the shape of which corresponds to that of the narrow strips of the junction device elements which are to be made and arranged in the mould, successively above and below moving spindles provided for leaving free holes for linking stems, the ends of the narrow strips being bent back around the spindle located at the free end of the future strips, the said moving spindles being removed before the stripping.

10. Method for making junction elements according to claim 4, characterised by the fact that it comprises the following operations:
a) removal of the elastomer material from both sides of the approximately central reinforcement, at the end of a conveyor band,
b) cut-out in this reinforcement (2") of longitudinal notches of a shape corresponding approximately, on one half of the length, to that of the future notches, the shape of these notches being, on the other half of their length, symmetrical to that of the first half with respect to a symmetry line dividing the two halves,
c) arrangement of the reinforcement layer thus prepared, below the moving spindles of the vulcanization or injection mould, provided for leaving free the holes for junction stems, bending back of the reinforcement layer beyond and around the moving spindle located in the utmost forward position, arrangement of the reinforcement layer above the moving spindles of the vulcanization or injection mould, thus forming a second reinforcement layer, application of the end of the reinforcement layer against the first layer,
d) vulcanization or injection of a material similar to that of the conveyor band or at least compatible with this latter.
